# EUROPEAN PATENT SPECIFICATION

(11) **EP 1 361 698 B1**
(45) Date of publication and mention of the grant of the patent: **05.11.2008**
(21) Application number: 03252850.7
(22) Date of filing: 07.05.2003
(51) Int. Cl.: H04L 12/58, H04L 12/18, H04L 12/24

(54) **Information distribution system, information processing apparatus and method**
Informationsverteilungssystem, Informationsverarbeitungsvorrichtung und -verfahren
Système de distribution de l'information, dispositif et méthode de traitement de l'information

(30) Priority: 08.05.2002 JP 2002132308
(43) Date of publication of application: 12.11.2003
(73) Proprietor: Sony Corporation, Tokyo 141-0001 (JP)
(72) Inventor: Ishikawa, Masayuki, c/o Sony Corporation, Tokyo 141 (JP)
(74) Representative: Mills, Julia

(56) References cited:
- EP-A1- 0 735 759
- US-A- 5 822 535
- US-A- 6 128 657

## Description

The present invention relates to an information distribution system, an information processing apparatus and method, a recording medium, and a program. More particularly, embodiments of the present invention relate to an information distribution system, an information processing apparatus and method, a recording medium, and a program in which, for example, the overhead involved with packetization is reduced by efficiently generating packet information during streaming distribution.

Hitherto, RTP (Real-Time Transport Protocol: RFC (Request for Comments) 1889) is known as a standard for performing streaming distribution using an IP (Internet Protocol) network such as the Internet. Usually, in order to use RTP, media data to be sent (for example, MPEG-1 (Moving Picture Experts Group) video ISO/IEC (International Organization For Standardization/International Electrotechnical Commission) 11172-2) must be converted into the RTP format.

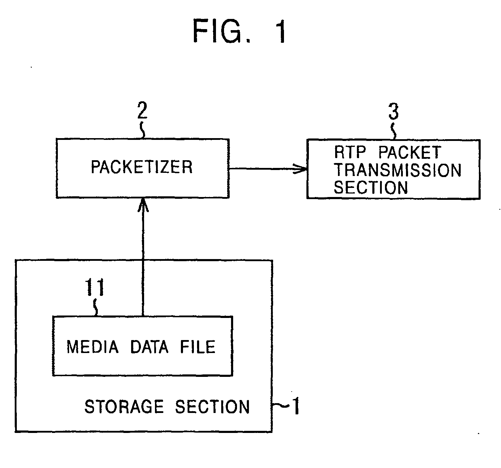

Fig. 1 shows an example of the configuration of a previously proposed transmission apparatus for performing streaming distribution.

A storage section 1 has prestored therein a media data file 11, and when the media data file 11 is to be distributed by streaming, the file is output to a packetizer 2. The packetizer 2 converts the media data file 11 input from the storage section 1 into RTP-format packets so that information in which packet loss is taken into consideration is contained in header information, and outputs the packets to an RTP packet transmission section 3 in sequence while the packets are being multiplexed. The RTP packet transmission section 3 then transmits (distributes) the RTP packets input from the packetizer 2.

As described above, in the transmission apparatus shown in Fig. 1, the media data file 11 is transmitted (distributed) while the file is converted into RTP packets on the fly.

However, in the case of the transmission apparatus shown in Fig. 1, since the media data is converted into RTP packets during streaming distribution, that transmission apparatus is unsuitable for on-demand streaming distribution.

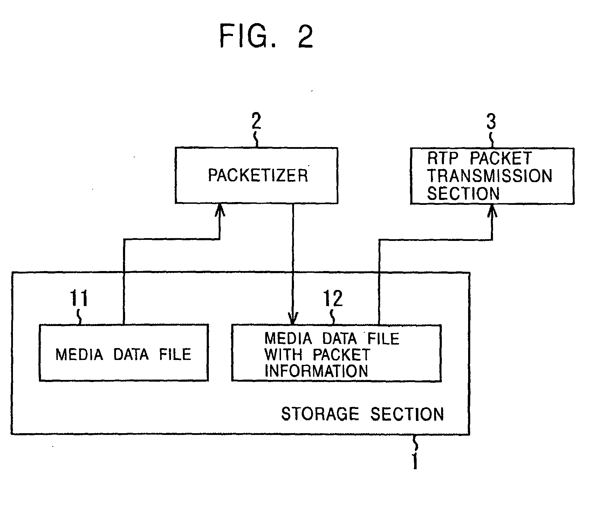

Therefore, for on-demand streaming distribution, a transmission apparatus shown in Fig. 2 is used. In Fig. 2, components corresponding to those in Fig. 1 are given the same reference numerals, and descriptions thereof are omitted where appropriate.

The packetizer 2 converts the media data file 11 input from the storage section 1 into RTP-format packets, generates the packet information thereof in advance, and stores in the storage section 1 a media data file 12 to which the packet information is added (hereinafter referred to as a "media data file with packet information"). The media data file 12 with packet information can store the packetized data itself. The packet information contains information about the size of the packets the data is divided into and the kind of information the RTP header information at that time should be formed, which can be obtained by referring to the original audio data or video tracks.

When streaming distribution is to be performed, the RTP packet transmission section 3 transmits (distributes) the RTP packets by referring to the packet information of the media data file 12 with packet information, which is stored in the storage section 1.

As described above, in the case of the transmission apparatus shown in Fig. 2, since the media data file 11 is converted into RTP packets in advance, the time required for conversion into RTP format can be shortened. Therefore, the transmission apparatus is suitable for on-demand streaming distribution.

However, in the case of the transmission apparatus shown in Fig. 2, irrespective of whether or not streaming distribution is performed, it is necessary to generate in advance RTP packets for all the media data files 11 (that is, the media data files 12 with packet information).

In addition, since the RTP packets must be generated in sequence starting from the start position of the streaming data, this is not efficient, and furthermore, the generated RTP packets cannot be partly deleted.

EPA-A-0735759 discloses a system for distributing media data which is able to provide this data to a large number of end devices. Thus, it has managing means for managing distribution of the data, the managing means receiving the demand data from the end devices and outputting distribution control data including channel information for the selected data.

Embodiments of the present invention seek to efficiently generate packet information, to reduce an overhead involved with packetization, and to delete packet information as necessary.

Aspects of the present invention are set out in the appended claims.

The invention will now be described by way of example with reference to the accompanying drawings, throughout which like parts are referred to by like references, and in which:
Fig. 1 shows an example of the configuration of a previously proposed transmission apparatus for performing streaming distribution;
Fig. 2 shows an example of the configuration of another previously proposed transmission apparatus for performing streaming distribution;
Fig. 3 shows an example of the configuration of a streaming distribution system to which an embodiment of the present invention is applied;
Fig. 4 is a block diagram showing an example of the configuration of a streaming distribution server;
Fig. 5 illustrates the function of a server program which is installed into the streaming distribution server and is executed;
Fig. 6 illustrates a process for creating an RTP information file;
Fig. 7 shows an example of the detailed structure of an RTP information file;
Fig. 8 is a flowchart illustrating a packet transmission process;
Fig. 9 is a flowchart illustrating the detailed process of step S1 of Fig. 8;
Fig. 10 is a flowchart illustrating the detailed process of step S4 of Fig. 8;
Fig. 11 is a flowchart illustrating the detailed process of step S6 of Fig. 8;
Fig. 12 shows an example of a template of an RTP information file;
Fig. 13 is a flowchart illustrating the detailed process of step S7 of Fig. 8;
Fig. 14 is a flowchart illustrating a stream data distribution stopping process; and
Fig. 15 is a flowchart illustrating an RTP information file deletion process.

The preferred embodiments of the present invention will now be described below with reference to the drawings.

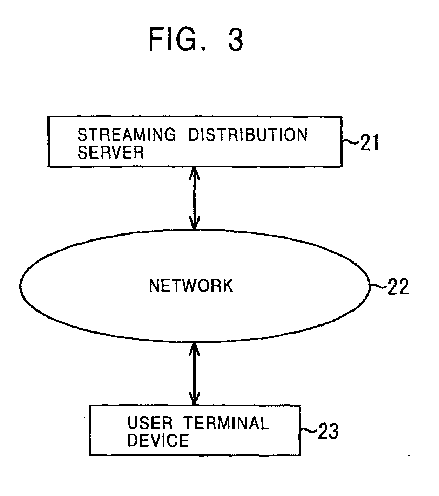

Fig. 3 shows an example of the configuration of a streaming distribution system to which an embodiment of the present invention is applied. In this streaming distribution system, a streaming distribution server 21 and a user terminal device 23 are connected to a network 22 such as the Internet.

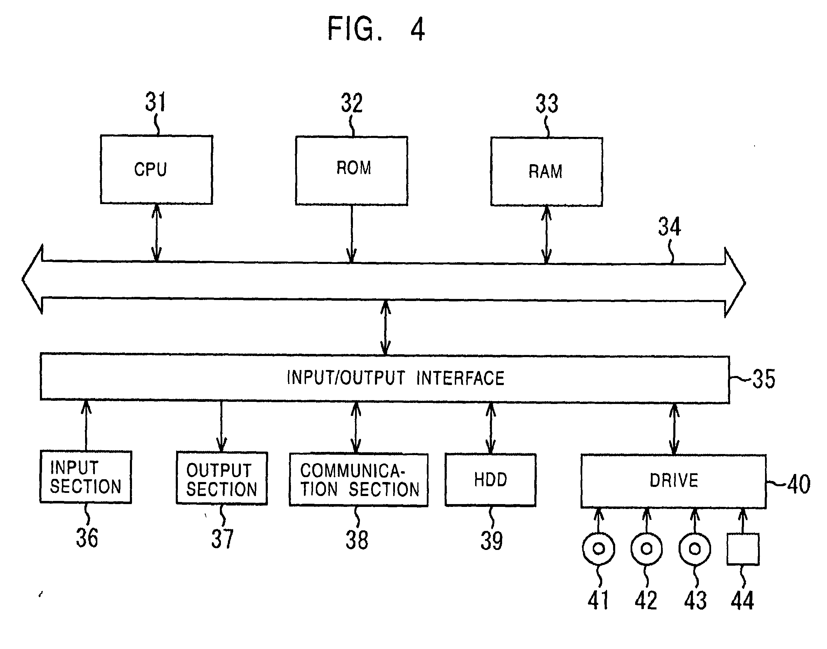

The streaming distribution server 21 is a computer, and a CPU (Central Processing Unit) 31 (Fig. 4) thereof performs processes (to be described later) on the basis of a server program. For example, the streaming distribution server 21 stores various types of media data in a hard disk drive (HDD) 39. When streaming distribution of predetermined media data is requested from the user terminal device 23 via the network 22, the streaming distribution server 21 reads the corresponding media data, generates RTP packets, and distributes them via the network 22.

The user terminal device 23, formed of, for example, a terminal cellular phone, a PDA (Personal Digital Assistant), or a personal computer, accesses the streaming distribution server 21 via the network 22, requests the distribution of media data, and receives the media data distributed on the basis of that request. The user terminal device 23 reproduces the received media data so that the media data can be viewed by the user.

The network 22 may be either a wired or wireless communication medium, such as a public switched network, a mobile wireless communication network, a local area network, a network such as the Internet, or a digital satellite broadcast.

In the example of the streaming distribution system shown in Fig. 3, only one user terminal device 23 is shown. However, of course, a large number of user terminal devices are connected.

Fig. 4 is a block diagram showing an example of the configuration of the streaming distribution server 21. Although not shown, the user terminal device 23 is also configured in the same manner.

The CPU 31 executes various processes in accordance with a server program stored in a ROM (Read Only Memory) 32 or a server program which is loaded into a RAM (Random Access Memory) 33 from the hard disk drive 39. In the RAM 33, data required for the CPU 31 to execute various processes, etc., is stored as necessary.

The CPU 31, the ROM 32, and the RAM 33 are interconnected with each other via a bus 34. An input/output interface 35 is also connected to this bus 34.

Connected to the input/output interface 35 are an input section 36 including buttons, switches, a keyboard, a mouse, etc.; an output section 37 including a CRT (Cathode Ray Tube) or an LCD (Liquid-Crystal Display), a speaker, etc.; a communication section 38 including a modem, a terminal adaptor, etc.; and the hard disk drive 39. The communication section 38 performs communication processes via the network 22. In the hard disk drive 39, in addition to a server program, media data and RTP information which is created on the basis of the media data are stored in such a manner as to be formed as a database.

Furthermore, a drive 40 is connected to the input/output interface 35 as necessary. A magnetic disk 41, an optical disk 42, an magneto-optical disk 43, a semiconductor memory 44, and the like are loaded as appropriate into the input/output interface 35. A computer program (server program, etc.) which is read therefrom is installed into the hard disk drive 39 as necessary.

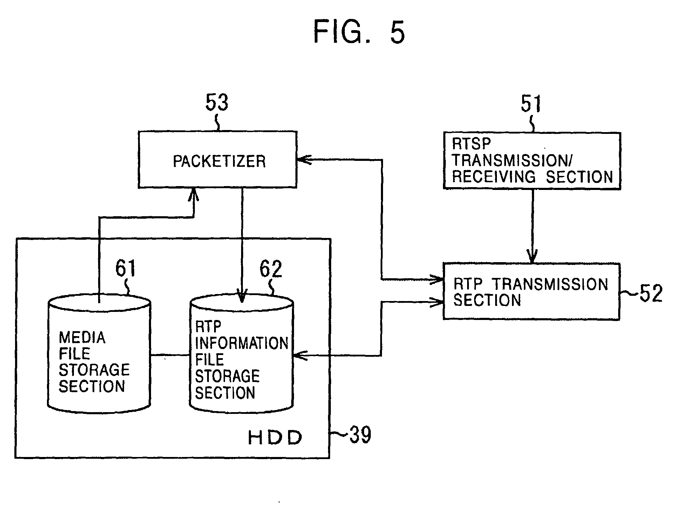

Fig. 5 illustrates the function of a server program which is installed into the streaming distribution server 21 and is executed.

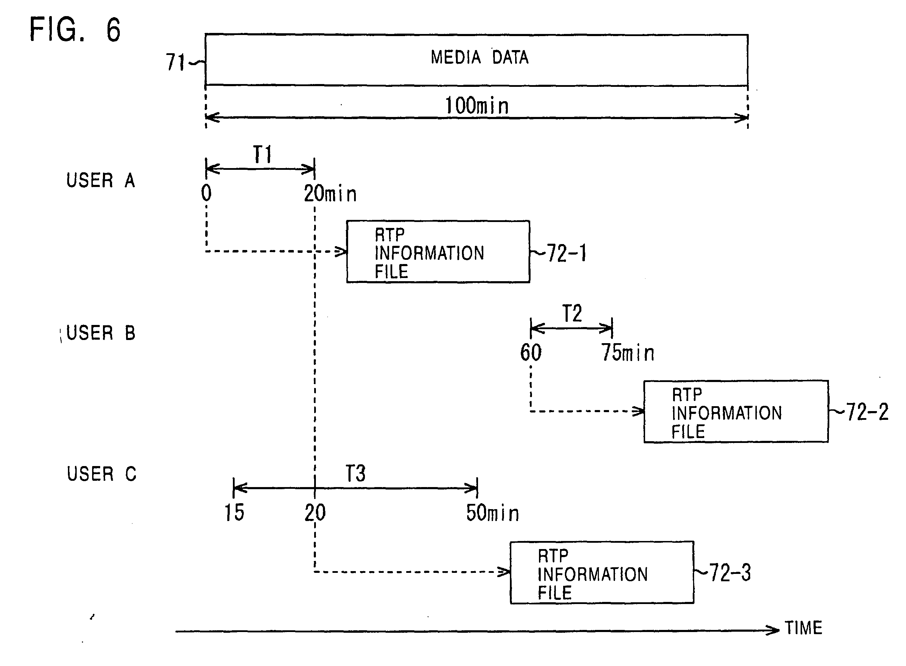

The hard disk drive 39 is provided with a media file storage section 61 for storing a plurality of types of media data, and an RTP information file storage section 62 for storing RTP information files (the details thereof will be described later with reference to Fig. 6) created on the basis of the media data. The media data and the RTP information files are linked by reference (pointer) information, etc.

An RTSP (Real-Time Streaming Protocol: RFC2326) transmission/receiving section 51 controls the transmission/reception of the information of the RTP into and from the user terminal device 23 via the network 22.

For example, when a DESCRIBE method of RTSP is transmitted (issued) from the user terminal device 23 via the network 22, the RTSP transmission/receiving section 51 returns information on desired media data as SDP (Session Description Protocol: RFC2327) in accordance with the DESCRIBE method.

Furthermore, for example, when a SETUP method for RTSP is transmitted from the user terminal device 23 receiving the SDP via the network 22, the RTSP transmission/receiving section 51 causes an RTP transmission section 52 to prepare for the transmission of packets in accordance with the SETUP method. In the SETUP method, information on UDP (User Datagram Protocol) ports through which the user terminal device 23 receives media data, etc., is contained.

Furthermore, for example, after the setup of the RTP transmission section 52 is terminated, when a PLAY method (play request command) of RTSP has been transmitted from the user terminal device 23 via the network 22, the RTSP transmission/receiving section 51 supplies the PLAY method to the RTP transmission section 52.

The RTP transmission section 52 performs a setup for sending packets to the user terminal device 23 on the basis of the information on the UDP ports, which is contained in the SETUP method supplied from the RTSP transmission/receiving section 51.

The RTP transmission section 52 searches for a desired RTP information file by referring to the RTP information file storage section 62 of the hard disk drive 39 in accordance with the PLAY method supplied from the RTSP transmission/receiving section 51.

When the desired RTP information file is found, the RTP transmission section 52 controls a packetizer 53 so as to read desired media data from a plurality of types of media data stored in the media file storage section 61 on the basis of the found RTP information file and so as to generate RTP packets.

When the desired RTP information file is not found, the RTP transmission section 52 controls the packetizer 53 so as to read desired media data from a plurality of types of media data stored in the media file storage section 61, to create an RTP information file from the read media data, to store the RTP information file in the RTP information file storage section 62 of the hard disk drive 39, and to generate RTP packets on the basis of the created RTP information file.

The RTP transmission section 52 transmits (distributes) the RTP packets generated by the packetizer 53 to the user terminal device 23 via the network 22.

Fig. 6 illustrates a process in which the streaming distribution server 21 creates an RTP information file in accordance with the PLAY method from the user terminal device 23. The horizontal axis in Fig. 6 indicates time (time axis). Here, a description is given of a case in which a plurality of users (users A to C in the case of the example of Fig. 6) request a PLAY method (play) with regard to media data 71 stored in the media file storage section 61. It is assumed that the media data 71 of 100 minutes in length has not been accessed even once and that an RTP information file has not yet been created.

For example, when the user A requests the PLAY method for the data at an interval T1 (0 to 20 minutes) among the media data 71, the RTSP transmission/receiving section 51 of the streaming distribution server 21 controls the RTP transmission section 52 so as to search the RTP information file storage section 62 for the RTP information file corresponding to the PLAY method. Since the desired RTP information cannot be found, the RTP transmission section 52 controls the packetizer 53 so as to read the media data 71 at interval T1, stored in the media file storage section 61, to create an RTP information file 72-1 from the read media data 71, to store the RTP information file 72-1 in the RTP information file storage section 62, and to generate RTP packets on the basis of the created RTP information file 72-1. As a result, the RTP transmission section 52 can transmit the RTP packets of the media data 71 at interval T1, which are generated by the packetizer 53, to the terminal of the user A.

Furthermore, for example, when the user B requests the PLAY method for the data at interval T2 (60 to 75 minutes) among the media data 71, the RTSP transmission/receiving section 51 controls the RTP transmission section 52 in order to search the RTP information file storage section 62 for an RTP information file corresponding to the PLAY method. Since the desired RTP information file cannot be found, the RTP transmission section 52 controls the packetizer 53 so as to create an RTP information file 72-2 from the media data 71 at interval T2, to store the RTP information file 72-2 in the RTP information file storage section 62, and to generate RTP packets on the basis of the created RTP information file 72-2. As a result, the RTP transmission section 52 can transmit the RTP packets of the media data 71 at interval T2, which are generated by the packetizer 53, to the terminal of the user B.

Furthermore, for example, when the user C requests the PLAY method for the data at interval T3 (15 to 50 minutes) among the media data 71, the RTSP transmission/receiving section 51 controls the RTP transmission section 52 so as to search the RTP information file storage section 62 for an RTP information file corresponding to the PLAY method.

In the above case, since the RTP information file 72-1 of the media data 71 at the interval of 0 to 20 minutes has already been created in accordance with the above-described access from the user A, the RTP information file 72-1 is searched for. Then, the RTP transmission section 52 generates the RTP packets of the media data 71 at the interval of 15 to 20 minutes on the basis of the found RTP information file 72-1. However, since the RTP information file of the media data 71 at the interval of 20 to 50 minutes has not yet been created, the RTP transmission section 52 controls the packetizer 53 so as to create an RTP information file 72-3 from the media data 71 at the interval of 20 to 50 minutes, to store the RTP information file in the RTP information file storage section 62, and to generate RTP packets on the basis of the created RTP information file 72-3. As a result, the RTP transmission section 52 can transmit the RTP packets of the media data 71 at interval T3, which are generated by the packetizer 53, to the terminal of the user C.

In the manner described above, in accordance with the PLAY method from the user (user terminal device 23), a plurality of RTP information files 72-1 to 72-3 are created from one media data 71, and these files are stored in the RTP information file storage section 62. As a result, when sending the RTP packets, the stored RTP information files 72-1 to 72-3 can be referred to, and the RTP packets can be efficiently generated and transmitted.

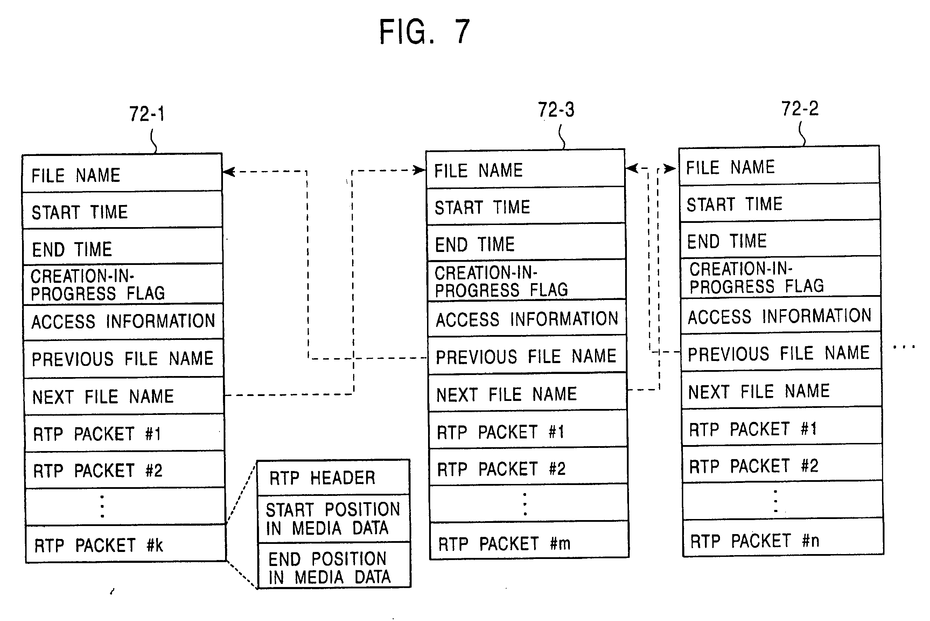

Fig. 7 shows an example of the detailed structure of the RTP information files 72-1 to 72-3, which are created in the process of Fig. 6. As shown in Fig. 7, in each of the RTP information files 72-1 to 72-3, information composed of a file name, a start time, an end time, a creation-in-progress flag, access information, a previous file name, a next file name, and a plurality of RTP packets is recorded. In each RTP packet, information composed of an RTP header, a start position in the media data, and an end position in the media data is recorded.

The file name is a name affixed to the RTP information file, and can be uniquely named by being set as, for example, "the file name of the media data + the start time". The start time and the end time indicate time in the media data. The creation-in-progress flag is set to "1" when the RTP information file is being created, and is reset to "0" when the creation is terminated. The access information indicates counter information which is incremented by 1 each time this RTP information file is accessed. The previous file name indicates the file name of the RTP information file before the current RTP information file. The next file name indicates the file name of the RTP information file after the current RTP information file.

The RTP packet represents data of a predetermined length, generated at the frame interval between the start time and the end time, which is specified by the PLAY method of the media data. The RTP header indicates a time stamp contained in the generated RTP packet. The start time in the media data and the end time in the media data indicate time within the frame interval specified by the PLAY method of the media data.

In the case of the example of Fig. 7, for example, "Movie1.mpg.000000" is recorded in the file name of the RTP information file 72-1; "0 minutes" is recorded in the start time; "20 minutes" is recorded in the end time; "0" is recorded in the creation-in-progress flag; "2" is recorded in the access information (because the user A and the user C have made accesses as a result of the above-described process of Fig. 6); "0, No, or does not exist" is recorded in the previous file name, and "Movie1.mpg.00002" (the file name of the RTP information file 72-3) is recorded in the next file name. Furthermore, "0 packets" is recorded in the start position in the media data of RTP packet #1; "10 packets" is recorded in the end position in the media data thereof; "11 packets" is recorded in the start position in the media data of RTP packet #2; "20 packets" is recorded in the end position in the media data; etc.

For example, "Movie1.mpg.000020" is recorded in the file name of the RTP information file 72-3; "20 minutes" is recorded in the start time; "50 minutes" is recorded in the end time; "0" is recorded in the creation-in-progress flag; "1" is recorded in the access information (because the user C has accessed as a result of the above-described process of Fig. 6); "Movie1.mpg.000000" (the file name of the RTP information file 72-1) is recorded in the next file name; and "Movie1.mpg.000060" (the file name of the RTP information file 72-2) is recorded in the next file name. Furthermore, "0 packets" is recorded in the start position in the media data of RTP packet #1; "10 packets" is recorded in the end position in the media data thereof; "11 packets" is recorded in the start position in the media data of RTP packet #2; "20 packets" is recorded at the end position in the media data thereof; etc.

For example, "Movie1.mpg.000060" is recorded in the file name of the RTP information file 72-2; "60 minutes" is recorded in the start time; "75 minutes" is recorded in the end time; "0" is recorded in the creation-in-progress flag; "1" is recorded in the access information (because the user B have accessed as a result of the above-described process of Fig. 6); "Movie1.mpg.000020" (the file name of the RTP information file 72-3) is recorded in the previous file name; and "0, No, or does not exist" is recorded in the next file name. Furthermore, "0 packets" is recorded in the start position in the media data of RTP packet #1; "10 packets" is recorded in the end position in the media data thereof; "11 packets" is recorded in the start position in the media data of RTP packet #2; "20 packets" is recorded in the end position in the media data thereof; etc.

In the manner described above, the file size can be minimized by causing only the pointer information to the media data (the start position in the media data and the end position in the media data) to be contained in each RTP packet of the RTP information files 72-1 to 72-3 rather than storing actual data.

Furthermore, since the RTP information files 72-1 to 72-3 are linked with one another, in a packet transmission process to be described below, an RTP information file can be efficiently searched for.

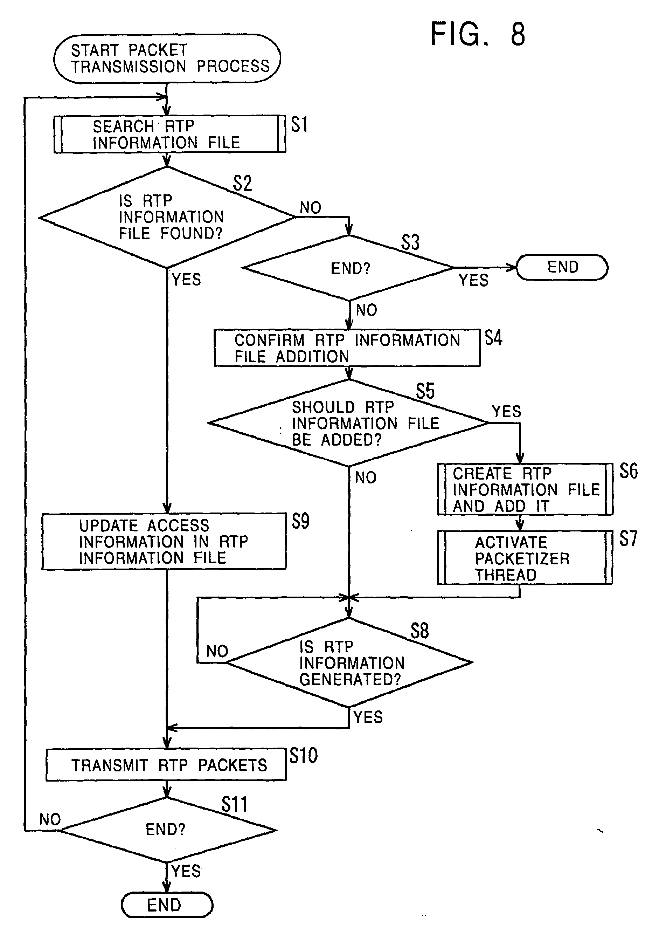

Next, referring to the flowchart in Fig. 8, a packet transmission process to be performed by the streaming distribution server 21 will be described below. This process (thread) is started when the streaming distribution server 21 receives a PLAY method from the user terminal device 23 via the network 22.

The RTSP transmission/receiving section 51 supplies the PLAY method received from the user terminal device 23 to the RTP transmission section 52. In step S1, the RTP transmission section 52 searches the RTP information file storage section 62 of the hard disk drive 39 for a desired RTP information file in accordance with the PLAY method supplied from the RTSP transmission/receiving section 51.

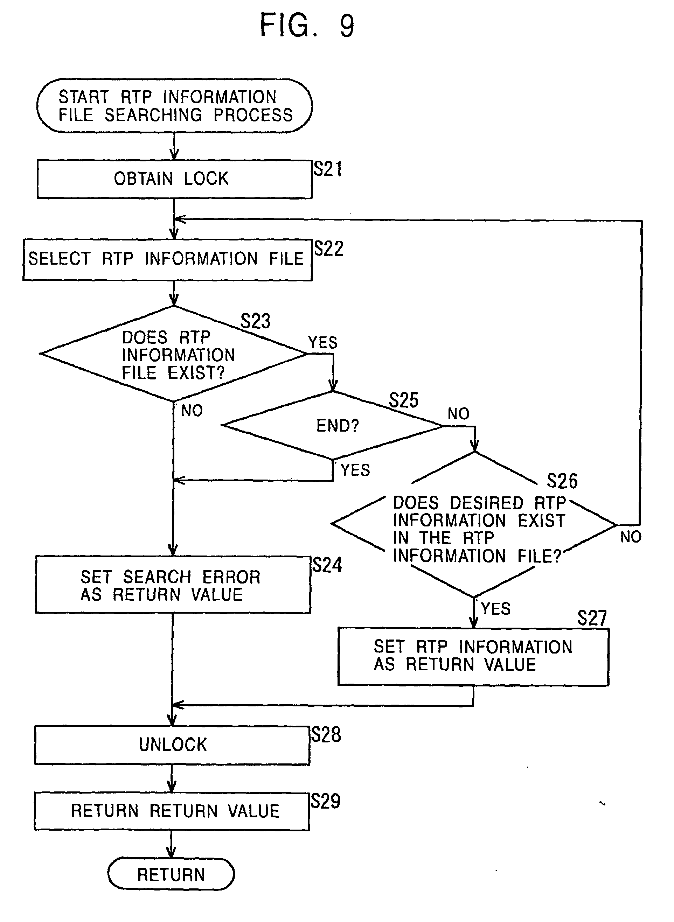

Referring to the flowchart in Fig. 9, a description will now be given below in detail of a process for searching for an RTP information file. This process is started when the streaming distribution server 21 receives the PLAY method from the user terminal device 23 via the network 22 by using the file name of the media data to be streamed and the start time, which are contained in the PLAY method, as search keys.

In step S21, the RTP transmission section 52 obtains a lock (for example, a key) for the media data to be streamed. Here, the lock is information which is required when the RTP information file is to be added, deleted or searched for. In the above case, as described in Fig. 6, in order to lock all of a plurality of RTP information files 72-1 to 72-3 created from one media data 71, the process of step S21 is performed.

In step S22, the RTP transmission section 52 selects the RTP information file (the RTP information file 72-1 in the case of the current example) for the media data 71 (Fig. 6) to be streamed among the RTP information files stored in the RTP information file storage section 62 of the hard disk drive 39. In step S23, the RTP transmission section 52 determines whether or not an RTP information file for the media data to be streamed exists. When it is determined that the desired RTP information file does not exist, the process proceeds to step S24. In contrast, when it is determined in step S23 that the desired RTP information file exists, the process proceeds to step S25, where the RTP transmission section 52 determines whether or not an instruction for stopping the searching process has been given. When it is determined that the instruction for stopping the searching process has been given, the process proceeds to step S24.

In step S24, the RTP transmission section 52 sets a "search error" as a return value. Examples of search errors which are set here include a "file-absent search error", a "file-present search error", and a "forced-end search error".

When it is determined in step S25 that an instruction for stopping the searching process has not been given, the process proceeds to step S26, where the RTP transmission section 52 determines whether or not the desired RTP information file exists in the RTP information file. When it is determined that the desired RTP information file exists, the process proceeds to step S27, where the RTP information is set as the return value.

When it is determined in step S26 that the desired RTP information file does not exist in the RTP information file, the process returns to step S22, where the next RTP information file (the RTP information file 72-3 in the above case) for the media data to be processed, and the above-described processes are repeatedly performed. The next RTP information file is selected by obtaining the next file name of the RTP information file 72-1 (i.e., the file name ("Movie1.mpg.000020") of the RTP information file 72-3) which is currently selected.

After the process of step S24 or S27, in steps S28 and S29, the RTP transmission section 52 opens the lock, and returns the return value to the calling side (the packet transmission process). Thereafter, the process returns to step S2 of Fig. 8.

In step S2, the RTP transmission section 52 determines whether or not the desired RTP information file is found, that is, whether or not the RTP information has been set in the return value which is returned in the process of step S29 of Fig. 9. When it is determined that the RTP information file is found, the process proceeds to step S9. In step S9, the RTP transmission section 52 updates (increments by 1) the access information contained in the found RTP information file, and controls the packetizer 53 so as to generate RTP packets on the basis of the found RTP information file.

When it is determined in step S2 that the RTP information file has not been found, the process proceeds to step S3, where the RTP transmission section 52 determines whether or not the packet transmission process should be terminated, that is, whether or not all the RTP information files have been found. When the RTP transmission section 52 determines that the packet transmission process should be terminated, the processing is terminated.

When it is determined in step S3 that the packet transmission process should not be terminated, that is, it is determined that there is an RTP information file which has not yet been found, the process proceeds to step S4, where the RTP transmission section 52 confirms whether an RTP information file should be added.

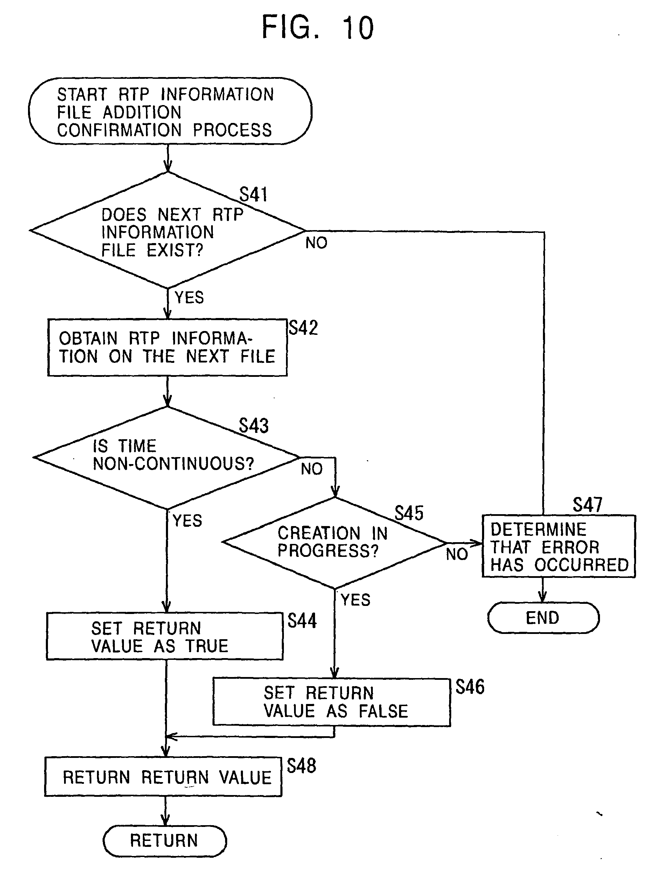

Referring to the flowchart in Fig. 10, an RTP information file addition confirmation process will now be described below in detail. This process is started when, after the RTP information file is searched for, it is determined that the desired RTP information file is not found.

In step S41, the RTP transmission section 52 determines whether or not the next RTP information file exists, that is, whether or not the RTP information file 72-3 indicated by the next file name of the RTP information file 72-1 which is currently selected exists in the RTP information file storage section 62. When it is determined that the next RTP information file exists, the process proceeds to step S42, where the start time (20 minutes in the above case) is obtained from the RTP information on the next RTP information file.

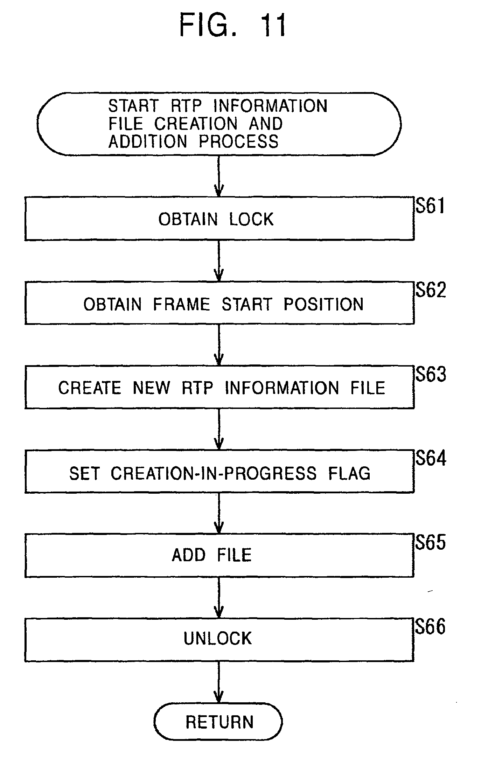

In step S43, the RTP transmission section 52 determines whether or not the start time of the next RTP information file, obtained in the process of step S42, is not continuous (whether or not the start time is non-continuous) to the end time (20 minutes in the above case) of the current RTP information file. When it is determined that the next RTP information file is not continuous to the current RTP information file, the process proceeds to step S44, where the return value is set to "true". As a result, in the process which will be described later with reference to the flowchart in Fig. 11, a new RTP information file is created.

When it is determined in step S43 that the next RTP information file is not non-continuous (that is, it is continuous) to the current RTP information file, the process proceeds to step S45, where the RTP transmission section 52 determines whether or not the next RTP information file is being created, that is, the creation-in-progress flag of the next RTP information file is "1".

When it is determined in step S45 that the next RTP information file is being created, the process proceeds to step S46, where the RTP transmission section 52 sets the return value to "false". Here, the reason why the next RTP information file is being created is that, since the RTP information file is being currently created, there is a possibility that searching was unsuccessful in the above-described process of step S1 of Fig. 8. Therefore, when the file is being created, as a result of the return value being set to "false", in the process to be described later, an RTP information file is not newly created, and the process is blocked until the RTP information is obtained from this RTP information file which is being created.

When it is determined in step S45 that the next RTP information file is not being created, that is, when it is determined that the creation-in-progress flag is "0", or when it is determined in step S41 that the next RTP information file does not exist (because this is contradictory to the process of step S3 of Fig. 8), the process proceeds to step S47, where the RTP transmission section 52 determines that an error has occurred, and the processing is terminated.

After the process of step S44 or S46, in step S48, the RTP transmission section 52 returns the return value to the calling side (the packet transmission process), and the process returns to step S5 of Fig. 8.

In step S5, the RTP transmission section 52 determines whether or not an RTP information file should be added, that is, whether or not the return value returned in the process of step S48 of Fig. 10 is "true". When it is determined that the RTP information should not be added (the return value is "false"), the process proceeds to step S8. In contrast, when the RTP information should be added (the return value is "true"), the process proceeds to step S6, where the RTP transmission section 52 creates an RTP information file and adds the RTP information file to the hard disk drive 39.

Referring to the flowchart in Fig. 11, the details of processes for creating and adding an RTP information file will now be described below. This process is started when the desired RTP information file is not found and it is determined that an RTP information file should be newly added.

In step S61, the RTP transmission section 52 obtains a lock for the media data to be streamed, and in step S62, a frame start position is obtained. This is obtained for the purpose of changing the start time so that, when the start time is not aligned with the start position of the frame, the start time is changed so as to be aligned with the start position of the frame. For example, in a case where the frame is defined in units of one second, when the start time of the media data from the user terminal device 23 is specified as 10.5 seconds, the start position of the frame is re-specified as 11 seconds.

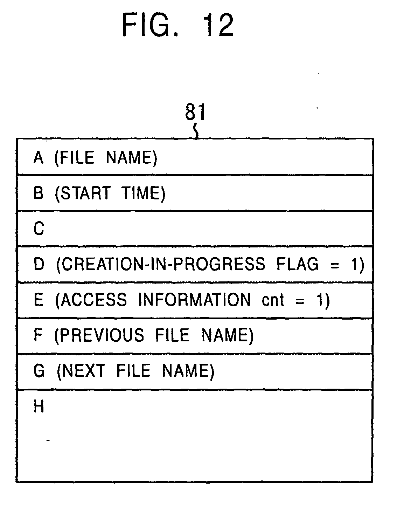

In step S63, the RTP transmission section 52 newly creates an RTP information file. More specifically, a template 81 (a file divided into areas A to H in the case of the example of Fig. 12) for the RTP information file, shown in Fig. 12, is provided, a file name is set (recorded) in the area A, and an RTP information file is created.

Here, the file name of the RTP information file can be uniquely named by being set as, for example, "the file name of the media data + the start time". For example, when the file name of the media data is "Movie1.mpg" and the start time is "00 hour 00 minutes 00 seconds", the file name is named as "Movie1.mpg.000000", and when the start time is "00 hour 00 minutes 10 seconds", the file name is named as "Movie1.mpg.000010". The naming of the file name is not particularly limited to this; it may be identification information (ID) which is capable of uniquely specifying the RTP information file.

In step S64, the RTP transmission section 52 sets (records) the start time in an area B of a new RTP information file, sets the creation-in-progress flag = 1 in an area D thereof, and sets access information cnt = 1 in an area E thereof. In this manner, as a result of setting the creation-in-progress flag in the RTP information file, in the above-described process of step S45 of Fig. 10, it can be confirmed whether or not the RTP information file is being created.

In step S65, the RTP transmission section 52 adds a file by updating link information in the previous and subsequent RTP information files. That is, the previous file name is set (added) in an area F of the new RTP information file, and the next file name is set (added) in an area G thereof. In step S66, the RTP transmission section 52 performs an unlocking process, and the process returns to step S7 of Fig. 8.

In step S7, the RTP transmission section 52 controls the packetizer 53 so as to perform a packetizer thread (process).

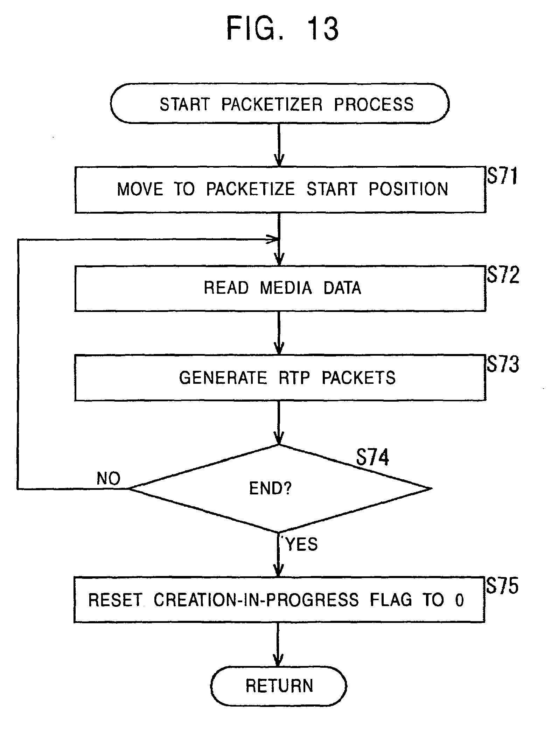

Referring to the flowchart in Fig. 13, a packetizer process will now be described below in detail. This process is started when the RTP information file which is newly created in the process of Fig. 11 (the process of step S6 of Fig. 8) is input to the packetizer 53.

In step S71, the packetizer 53 moves to the packetize start position in the media data on the basis of the start time contained in the input new RTP information file. Here, for example, when the start time is not aligned with the start (the start of the GOP (Group of Pictures) in the case of MPEG Video, and the start of AAU (Audio Access Unit) in the case of MPEG Audio) position of the frame, the start time is aligned with the start position of the frame.

In step S72, the packetizer 53 reads media data from the packetize start position which is moved in the process of step S71, and generates RTP packets in step S73. The generated RTP packets are added to the area H (Fig. 12) of the RTP information file. In step S74, the packetizer 53 determines whether or not the packetizer process should be terminated, that is, whether or not the packetizer process termination flag is set and the media data has reached the start position of the next frame. When it is determined that the packetizer process should not be terminated, the process returns to step S72, where the above-described processes are repeatedly performed.

Then, when it is determined in step S74 that the packetizer process should be terminated, the process proceeds to step S75, where the RTP transmission section 52 resets the creation-in-progress flag for the RTP information file to "0" in order to set the fact that the writing into the RTP information file is terminated. Thereafter, the process returns to step S8 of Fig. 8.

In the manner described above, the packetizer process, which is based on one RTP information file, always starts at the start position of the frame and ends at an arbitrary position of the frame.

In step S8, the RTP transmission section 52 determines whether or not the RTP information file is created, and the process blocks (waits) until it is determined that the RTP information file is created. Then, when it is determined that the RTP information file is created, the process proceeds to step S10, where the RTP transmission section 52 transmits (distributes) the RTP packets generated by the packetizer 53 to the user terminal device 23 via the network 22.

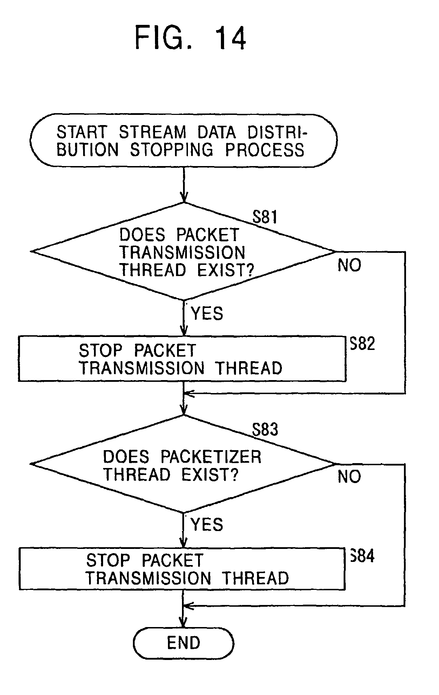

In step S11, the RTP transmission section 52 determines whether or not the packet transmission process should be terminated, that is, whether or not the packet transmission process has stopped by the media data stopping process, as will be described later with reference to the flowchart in Fig. 14. When it is determined that the packet transmission process has not yet been terminated, the process returns to step S1, where a process for searching for an RTP information file at the next time is performed, and subsequent processes are repeatedly performed.

When it is determined in step S11 that the packet transmission process should be terminated, the processing is terminated.

As described above, when the streaming distribution server 21 receives the PLAY method from the user terminal device 23, the streaming distribution server 21 performs the above-described packet transmission process, and first, the corresponding RTP information file is searched for. When the RTP information file is found, RTP packets are generated on the basis of the RTP information file. On the other hand, when the corresponding RTP information file is not found, an RTP information file is newly created, and based on the RTP information file, RTP packets are generated. That is, with respect to one media data, a plurality of RTP information files are created incrementally as necessary. Thus, when the RTP packets are to be transmitted, the created RTP information file is referred to, and the RTP packets are transmitted efficiently. In other words, there is no need to uselessly store the RTP information file, and an overhead involved with packetization can be reduced.

Referring to the flowchart in Fig. 14, a stream data distribution stopping process will now be described below. This process is started when, for example, a PAUSE method or a TEARDOWN method is issued from the user terminal device 23 to the URI (Uniform Resource Identifier) of the streaming distribution server 21 during streaming via the network 22.

The RTSP transmission/receiving section 51 supplies the PAUSE method or the TEARDOWN method received from the user terminal device 23 to the RTP transmission section 52. In step S81, the RTP transmission section 52 determines whether or not the packet transmission thread described with reference to Fig. 8 exists, that is, whether or not the packets are being transmitted. When it is determined that the packet transmission thread exists, the process proceeds to step S82, where the packet transmission thread is stopped. This process of step S82 includes a process in which a stop flag is set in the packet transmission thread and waiting is performed until the packet transmission thread is terminated.

When it is determined in step S81 that the packet transmission thread does not exist (the packets are not being transmitted), the process of step S82 is skipped, and the process proceeds to step S83.

In step S83, the RTP transmission section 52 monitors the packetizer 53 in order to determine whether or not a packetizer thread that is operating with respect to the session in which streaming is currently being performed exists. In this case, a packetizer thread for which streaming is performed in accordance with a request from another user does not correspond to the same media data. Therefore, the fact that the packetizer thread exists indicates that the streaming distribution server 21 is currently performing a packetizer process described with reference to Fig. 13 while performing streaming at the same time.

When it is determined in step S83 that the packetizer thread exists, the process proceeds to step S84, where the RTP transmission section 52 controls the packetizer 53 so as to stop the packet transmission thread. This process of step S84 includes a process in which a stop flag is set in the packetizer thread and the process waits until the packetizer thread is terminated.

When it is determined in step S83 that the packetizer thread does not exist, the process of step S84 is skipped, and the processing is terminated.

As described above, when the streaming distribution server 21 receives the PAUSE method or the TEARDOWN method from the user terminal device 23, the streaming distribution server 21 performs the stream data distribution stopping process and thus can quickly stop the streaming distribution.

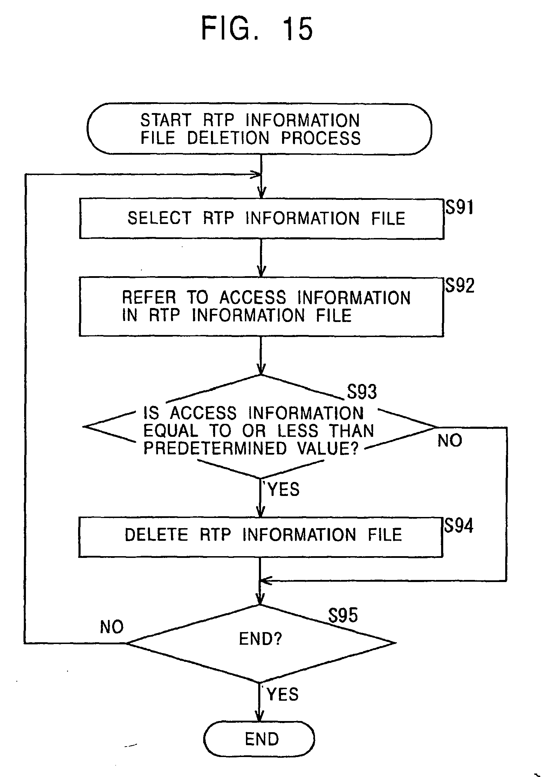

Referring to the flowchart in Fig. 15, a process for deleting the RTP information file will now be described below. This process is started when the amount of the available disk space of the hard disk drive 39 becomes small or when a deletion of the file is instructed by a manager for the streaming distribution server 21.

In step S91, the RTP transmission section 52 selects the RTP information stored in the hard disk drive 39. In step S92, the RTP transmission section 52 refers to the access information within the RTP information file, selected in the process of step S91, and in step S93, the RTP transmission section 52 determines whether or not the access information is equal to or less than a predetermined value (for example, 10).

When it is determined in step S93 that the access information within the selected RTP information file is equal to or less than a predetermined value, the process proceeds to step S94, where the RTP transmission section 52 deletes the RTP information file from the hard disk drive 39. When it is determined in step S93 that the access information is not equal to or less than a predetermined value (e.g., 11 or more), the process of step S94 is skipped.

In step S95, the RTP transmission section 52 determines whether or not the deletion process should be terminated, that is, whether or not all the RTP information files stored in the hard disk drive 39 have been selected and each access information has been referred to. When it is determined that there is an RTP information file which has not yet been selected, the process returns to step S91, where the above-described processes are repeatedly performed.

Then, when it is determined in step S95 that all the RTP information files stored in the hard disk drive 39 have been selected and each access information has been referred to, the processing is terminated.

As described above, since the access information within the RTP information file is incremented each time the media data is accessed, as a result of performing the deletion process described with reference to Fig. 15 as necessary, the RTP information file having a low access frequency (equal to or less than the predetermined value in the process of step S93 of Fig. 15) is deleted.

Therefore, in the foregoing, with respect to one media data, since a plurality of RTP information files are created incrementally as necessary, and since a file having a low access frequency can be deleted as necessary, there is no need to uselessly store an RTP information file.

Although the above-described series of processes can be performed by hardware, the processes can also be performed by software. In a case where the series of processes is performed by software, programs which form the software are installed from a recording medium into a computer incorporated into dedicated hardware or into, for example, a general-purpose personal computer capable of executing various types of functions by installing various programs.

A recording medium for recording a program, which is installed into a computer and is placed in a computer-executable state, is formed of a packaged medium such as the magnetic disk 41 (including a flexible disk), the optical disk 42 (including a CD-ROM (Compact Disk-Read Only Memory) and a DVD (Digital Versatile Disk)), the magneto-optical disk 43 (including an MD (Mini-Disc) (registered trademark)), or the semiconductor memory 44, as shown in Fig. 4. Alternatively, the recording medium is formed of the ROM 32 or a hard disk drive 39 in which a program is recorded temporarily or permanently. The recording of the program into the recording medium is performed by using a wired or wireless communication medium, such as a public switched network, a local area network, or the network 22 such as the Internet, or a digital satellite broadcast, via an interface such as a router or a modem as necessary.

In this specification, the steps forming the program recorded on a recording medium may be executed chronologically according to the written orders. However, they do not have to be executed chronologically, and they may be executed concurrently or individually.

In this specification, the system represents the entire apparatus formed of a plurality of devices.

## Claims

1. An information processing apparatus (21) for distributing media data to an information terminal device via a network, said information processing apparatus comprising:
management information generation means (53) for generating management information for managing the distribution of said media data in response to an instruction from said information terminal device to distribute media data from within a given time interval;
transmission data generation means (53) for generating transmission data for said media data from within said given time interval on the basis of said management information generated by said management information generation means; and
distribution means (52) for distributing said transmission data generated by said transmission data generation means to said information terminal device; wherein:
said management information generation means is adapted to generate new management information for sections of said given time interval for which management information has not previously been created, and for sections of said given time interval for which management information has already been created and to use said management information already created.

2. An information processing apparatus according to Claim 1, further comprising:
storage means (62) for storing said management information generated by said management information generation means; and
searching means for searching for said management information stored in said storage means when the distribution of said data is instructed from said information terminal device,
wherein, when said predetermined management information is found by said searching means, said transmission data generation means generates said transmission data on the basis of said predetermined found management information.

3. An information processing apparatus according to Claim 2, wherein, when said predetermined management information is not found by said searching means, said management information generation means newly generates said management information.

4. An information processing apparatus according to Claim 1, wherein said management information contains time information on said data.

5. An information processing apparatus according to Claim 1, wherein said management information contains access information on said data, and said information processing apparatus further comprises updating means for updating said access information when the distribution of said data is instructed from said information terminal device.

6. An information processing apparatus according to Claim 5, further comprising:
deletion means for deleting said management information on the basis of said access information.

7. An information distribution system for distributing data from an information processing apparatus (21) according to Claim 2 to an information terminal device via a network (22) said information terminal device (23) comprising:
instruction means for instructing the distribution of said media data from within said given time interval to said information processing apparatus; and
receiving means for receiving said transmission data distributed from said information processing apparatus in response to the instruction from said instruction means.

8. An information processing method for use with an information processing apparatus for distributing media data to an information terminal device via a network, said information processing method comprising :
a management information generation step of generating management information for managing the distribution of said media data in response to an instruction from said information terminal device to distribute media data from within a given time interval;
a transmission data generation step of generating transmission data from said media data from within said given time interval on the basis of said management information generated in the process of said management information generation step; and
a distribution step of distributing said transmission data generated in the process of said transmission data generation step to said information terminal device; wherein:
said management information generation step generates new management information for sections of said given time interval for which management information has not previously been created, and for sections of said given time interval for which management information has already been created and uses said management information already created.

9. A recording medium having formed thereon a computer-readable program for controlling an information processing apparatus for distributing media data to an information terminal device, said program performing, when executed in a computer :
a management information generation step of generating management information for managing the distribution of said media data in response to an instruction from said information device to distribute media data from within a given time interval
a transmission data generation step of generating transmission data from said media data from within said given time interval on the basis of said management information generated in the process of said management information generation step; and
a distribution step of distributing said transmission data generated in the process of said transmission data generation step to said information terminal device; wherein:
said management information generation step generates new management information for sections of said given time interval for which management information has not previously been created, and for sections of said given time interval for which management information has already been created and uses said management information already created.

10. A computer-executable program for controlling an information processing apparatus for distributing media data to an information terminal device via a network, said program performing, when executed in a computer :
a management information generation step of generating management information for managing the distribution of said media data in response to an instruction from said information terminal device to distribute media data from within a given time interval;
a transmission data generation step of generating transmission data from said media data from within said given time interval on the basis of said management information generated in the process of said management information generation step; and
a distribution step of distributing said transmission data generated in the process of said transmission data generation step to said information terminal device; wherein:
said management information generation step generates new management information for sections of said given time interval for which management information has not previously been created, and for sections of said given time interval for which management information has already been created and uses said management information already created.

## Patentansprüche

1. Informationsverarbeitungsvorrichtung (21) zum Verteilen von Mediendaten an eine Informationsendgeräteeinrichtung über ein Netzwerk, wobei die Informationsverarbeitungsvorrichtung umfasst:
eine Verwaltungsinformations-Erzeugungseinrichtung (53) zum Erzeugen von Verwaltungsinformation zum Verwalten der Verteilung der Mediendaten als Antwort auf eine Anweisung von der Informationsendgeräteeinrichtung, um Mediendaten innerhalb eines bestimmten Zeitintervalls zu verteilen;
eine Übertragungsdaten-Erzeugungseinrichtung (53) zum Erzeugen von Übertragungsdaten für die Mediendaten innerhalb des bestimmten Zeitintervalls auf Basis der Verwaltungsinformation, welche durch die Verwaltungsinformations-Erzeugungseinrichtung erzeugt wird; und
eine Verteilungseinrichtung (52) zum Verteilen der Übertragungsdaten, welche durch die Übertragungsdaten-Erzeugungseinrichtung erzeugt werden, an die Informationsendgeräteeinrichtung; wobei:
die Verwaltungsinformations-Erzeugungseinrichtung eingerichtet ist, neue Verwaltungsinformation für Abschnitte des bestimmten Zeitintervalls zu erzeugen, für welche Verwaltungsinformation nicht vorher erzeugt wurde, und für Abschnitte des bestimmten Zeitintervalls, für welche Verwaltungsinformation schon gebildet wurde und um die schon gebildete Verwaltungsinformation zu verwenden.

2. Informationsverarbeitungsvorrichtung nach Anspruch 1, welche außerdem aufweist:
eine Speichereinrichtung (62) zum Speichern der Verwaltungsinformation, welche durch die Verwaltungsinformations-Erzeugungseinrichtung erzeugt wird; und
eine Sucheinrichtung zum Suchen der Verwaltungsinformation, welche in der Speichereinrichtung gespeichert ist, wenn die Verteilung der Daten von der Informationsendgeräteeinrichtung angewiesen wird,
wobei, wenn die vorgegebene Verwaltungsinformation durch die Sucheinrichtung gefunden wird, die Übertragungsdaten-Erzeugungseinrichtung die Übertragungsdaten auf Basis der vorgegebenen gefundenen Verwaltungsinformation erzeugt.

3. Informationsverarbeitungsvorrichtung nach Anspruch 2, wobei, wenn die vorgegebene Verwaltungsinformation durch die Sucheinrichtung nicht gefunden wird, die Verwaltungsinformations-Erzeugungseinrichtung die Verwaltungsinformation neu erzeugt.

4. Informationsverarbeitungsvorrichtung nach Anspruch 1, wobei die Verwaltungsinformation Zeitinformation hinsichtlich der Daten enthält.

5. Informationsverarbeitungsvorrichtung nach Anspruch 1, wobei die Verwaltungsinformation Zugriffsinformation hinsichtlich der Daten enthält, und die Informationsverarbeitungsvorrichtung außerdem eine Aktualisierungseinrichtung zum Aktualisieren der Zugriffsinformation aufweist, wenn die Verteilung der Daten von der Informationsendgeräteeinrichtung angewiesen wird.

6. Informationsverarbeitungsvorrichtung nach Anspruch 5, welche außerdem aufweist:
eine Löscheinrichtung zum Löschen der Verwaltungsinformation auf Basis der Zugriffsinformation.

7. Informationsverteilungssystem zum Verteilen von Daten von einer Informationsverarbeitungsvorrichtung (21) nach Anspruch 2 an eine Informationsendgeräteeinrichtung über ein Netzwerk (22), wobei die Informationsendgeräteeinrichtung (23) aufweist:
eine Anweisungseinrichtung zum Anweisen der Verteilung der Mediendaten innerhalb des bestimmtes Zeitintervalls an die Informationsverarbeitungsvorrichtung; und
eine Empfangseinrichtung zum Empfangen der Übertragungsdaten, welche von der Informationsverarbeitungsvorrichtung verteilt werden, als Antwort auf die Anweisung von der Anweisungseinrichtung.

8. Informationsverarbeitungsverfahren zur Verwendung bei einer Informationsverarbeitungsvorrichtung zum Verteilen von Mediendaten an eine Informationsendgeräteeinrichtung über ein Netzwerk, wobei das Informationsverarbeitungsverfahren aufweist:
einen Verwaltungsinformations-Erzeugungsschritt zum Erzeugen von Verwaltungsinformation zum Verwalten der Verteilung der Mediendaten als Antwort auf eine Anweisung von der Informationsendgeräteeinrichtung, um Mediendaten innerhalb eines bestimmten Zeitintervalls zu verteilen;
einen Übertragungsdaten-Erzeugungsschritt zum Erzeugen von Übertragungsdaten von den Mediendaten innerhalb des bestimmten Zeitintervalls auf Basis der Verwaltungsinformation, welche im Prozess des Verwaltungsinformations-Erzeugungsschritts erzeugt wird; und
einen Verteilungsschritt zum Verteilen der Übertragungsdaten, welche im Prozess des Übertragungsdaten-Erzeugungsschritts erzeugt werden, an die Informationsendgeräteeinrichtung; wobei:
der Verwaltungsinformations-Erzeugungsschritt neue Verwaltungsinformation für Abschnitte des bestimmten Zeitintervalls erzeugt, für welche Verwaltungsinformation nicht vorher gebildet wurde, und für Abschnitte des bestimmten Zeitintervalls, für welche Verwaltungsinformation schon gebildet wurde, und die Verwaltungsinformation verwendet, welche schon gebildet wurde.

9. Aufzeichnungsmedium, auf welchem ein computer-lesbares Programm gebildet wurde, zum Steuern einer Informationsverarbeitungsvorrichtung zum Verteilen von Mediendaten an eine Informationsendgeräteeinrichtung, wobei das Programm durchführt, wenn es in einem Computer ausgeführt wird:
einen Verwaltungsinformations-Erzeugungsschritt zum Erzeugen von Verwaltungsinformation zum Verwalten der Verteilung der Mediendaten als Antwort auf eine Information von der Informationseinrichtung, um Mediendaten innerhalb eines bestimmten Zeitintervalls zu verteilen;
einen Übertragungsdaten-Erzeugungsschritt zum Erzeugen von Übertragungsdaten von den Mediendaten innerhalb des bestimmten Zeitintervalls auf Basis der Verwaltungsinformation, welche im Prozess des Verwaltungsinformations-Erzeugungsschritts erzeugt wird; und
einen Verteilungsschritt zum Verteilen der Übertragungsdaten, welche im Prozess des Übertragungsdaten-Erzeugungsschritts erzeugt werden, an die Informationsendgeräteeinrichtung; wobei:
der Verwaltungsinformations-Erzeugungsschritt neue Verwaltungsinformation für Abschnitte des bestimmten Zeitintervalls erzeugt, für welche Verwaltungsinformation nicht vorher gebildet wurde, und für Abschnitte des bestimmten Zeitintervalls, für welche Verwaltungsinformation schon gebildet wurde, und die Verwaltungsinformation, welche schon gebildet wurde, verwendet.

10. Computer-ausführbares Programm zum Steuern einer Informationsverarbeitungsvorrichtung zum Verteilen von Mediendaten an eine Informationsendgeräteeinrichtung über ein Netzwerk, wobei das Programm ausführt, wenn es in einem Computer ausgeführt wird:
einen Verwaltungsinformations-Erzeugungsschritt zum Erzeugen von Verwaltungsinformation zum Verwalten der Verteilung der Mediendaten als Antwort auf eine Anweisung von der Informationsendgeräteeinrichtung, um Mediendaten innerhalb eines bestimmten Zeitintervalls zu verteilen;
eine Übertragungsdaten-Erzeugungsschritt zum Erzeugen von Übertragungsdaten von den Mediendaten innerhalb des bestimmten Zeitintervalls auf Basis der Verwaltungsinformation, welche im Prozess des Verwaltungsinformations-Erzeugungsschritts erzeugt wird; und
einen Verteilungsschritt zum Verteilen der Übertragungsdaten, welche im Prozess des Übertragungsdaten-Erzeugungsschritts erzeugt werden, an die Informationsendgeräteeinrichtung; wobei:
der Verwaltungsinformations-Erzeugungsschritt neue Verwaltungsinformation für Abschnitte des bestimmten Zeitintervalls erzeugt, für welche Verwaltungsinformation vorher gebildet wurde, und für Abschnitte des bestimmten Zeitintervalls, für welche Verwaltungsinformation schon gebildet wurde, und die Verwaltungsinformation, welche schon gebildet wurde, verwendet.

## Revendications

1. Appareil de traitement d'informations (21) destiné à distribuer des données de médias à un dispositif terminal d'information via un réseau, ledit appareil de traitement d'informations comprenant :
un moyen de génération d'informations de gestion (53) destiné à générer des informations de gestion afin de gérer la distribution desdites données de médias en réponse à une instruction provenant dudit dispositif terminal d'information afin de distribuer les données de médias dans un intervalle de temps donné ;
un moyen de génération de données de transmission (53) destiné à générer des données de transmission pour lesdites données de médias dans ledit intervalle de temps donné sur la base desdites informations de gestion générées par ledit moyen de génération d'informations de gestion ; et
un moyen de distribution (52) destiné à distribuer lesdites données de transmission générées par ledit moyen de génération de données de transmission audit dispositif terminal d'information ;
dans lequel :
ledit moyen de génération d'informations de gestion est adapté afin de générer de nouvelles informations de gestion pour les sections dudit intervalle de temps donné pour lesquelles des informations de gestion n'ont pas été créées auparavant, et pour les sections dudit intervalle de temps donné pour lesquelles des informations de gestion ont déjà été créées, et d'utiliser lesdites informations de gestion déjà créées.

2. Appareil de traitement d'informations selon la revendication 1, comprenant en outre :
un moyen de stockage (62) destiné à stocker lesdites informations de gestion générées par ledit moyen de génération d'informations de gestion ; et
un moyen de recherche destiné à rechercher lesdites informations de gestion stockées dans ledit moyen de stockage lorsque la distribution desdites données est demandée par ledit dispositif terminal d'information,
dans lequel, lorsque lesdites informations de gestion prédéterminées sont trouvées par ledit moyen de recherche, ledit moyen de génération de données de transmission génère lesdites données de transmission sur la base desdites informations de gestion prédéterminées trouvées.

3. Appareil de traitement d'informations selon la revendication 2, dans lequel, lorsque lesdites informations de gestion prédéterminées ne sont pas trouvées par ledit moyen de recherche, ledit moyen de génération d'informations de gestion génère à nouveau lesdites informations de gestion.

4. Appareil de traitement d'informations selon la revendication 1, dans lequel lesdites informations de gestion contiennent des informations temporelles relatives auxdites données.

5. Appareil de traitement d'informations selon la revendication 1, dans lequel lesdites informations de gestion contiennent des informations d'accès relatives auxdites données, et ledit appareil de traitement d'informations comprend en outre un moyen de mise à jour destiné à mettre à jour lesdites informations d'accès lorsque la distribution desdites données est demandée par ledit dispositif terminal d'information.

6. Appareil de traitement d'informations selon la revendication 5, comprenant en outre :
un moyen de suppression destiné à supprimer lesdites informations de gestion sur la base desdites informations d'accès.

7. Système de distribution d'informations destiné à distribuer des données provenant d'un appareil de traitement d'informations (21) selon la revendication 2 à un dispositif terminal d'information via un réseau (22), ledit dispositif terminal d'information (23) comprenant :
un moyen d'instruction destiné à demander la distribution desdites données de médias pendant ledit intervalle de temps donné audit appareil de traitement d'informations ; et
un moyen de réception destiné à recevoir lesdites données de transmission distribuées par ledit appareil de traitement d'informations en réponse à l'instruction dudit moyen d'instruction.

8. Procédé de traitement d'informations destiné à être utilisé avec un appareil de traitement d'informations afin de distribuer des données de médias à un dispositif terminal d'information via un réseau, ledit procédé de traitement d'informations comprenant :
une étape de génération d'informations de gestion consistant à générer des informations de gestion afin de gérer la distribution desdites données de médias en réponse à une instruction dudit dispositif terminal d'information afin de distribuer les données de médias dans un intervalle de temps donné ;
une étape de génération de données de transmission consistant à générer des données de transmission à partir desdites données de médias dans ledit intervalle de temps donné sur la base desdites informations de gestion générées pendant le processus de ladite étape de génération d'informations de gestion ; et
une étape de distribution consistant à distribuer lesdites données de transmission générées pendant le processus de ladite étape de génération de données de transmission audit dispositif terminal d'information ; dans lequel :
ladite étape de génération d'informations de gestion génère de nouvelles informations de gestion pour les sections dudit intervalle de temps donné pour lesquelles des informations de gestion n'ont pas été créées auparavant, et pour les sections dudit intervalle de temps donné pour lesquelles des informations de gestion ont déjà été créées, et utilise lesdites informations de gestion déjà créées.

9. Support d'enregistrement ayant, formé dessus, un programme lisible par ordinateur permettant de contrôler un appareil de traitement d'informations afin de distribuer des données de médias à un dispositif terminal d'information, ledit programme effectuant, lorsqu'il est exécuté sur un ordinateur :
une étape de génération d'informations de gestion consistant à générer des informations de gestion afin de gérer la distribution desdites données de médias en réponse à une instruction dudit dispositif d'information afin de distribuer les données de médias pendant un intervalle de temps donné ;
une étape de génération de données de transmission consistant à générer des données de transmission à partir desdites données de médias pendant ledit intervalle de temps donné sur la base desdites informations de gestion générées pendant le processus de ladite étape de génération d'informations de gestion ; et
une étape de distribution consistant à distribuer lesdites données de transmission générées pendant le processus de ladite étape de génération de données de transmission audit dispositif terminal d'information ; dans lequel :
ladite étape de génération d'informations de gestion génère de nouvelles informations de gestion pour les sections dudit intervalle de temps donné pour lesquelles des informations de gestion n'ont pas été créées auparavant, et pour les sections dudit intervalle de temps donné pour lesquelles des informations de gestion ont déjà été créées, et utilise lesdites informations de gestion déjà créées.

10. Programme exécutable par un ordinateur et permettant de contrôler un appareil de traitement d'informations afin de distribuer des données de médias à un dispositif terminal d'information via un réseau, ledit programme effectuant, lorsqu'il est exécuté sur un ordinateur :
une étape de génération d'informations de gestion consistant à générer des informations de gestion afin de gérer la distribution desdites données de médias en réponse à une instruction dudit dispositif terminal d'information afin de distribuer les données de médias pendant un intervalle de temps donné ;
une étape de génération de données de transmission consistant à générer des données de transmission à partir desdites données de médias pendant ledit intervalle de temps donné sur la base desdites informations de gestion générées pendant le processus de ladite étape de génération d'informations de gestion ; et
une étape de distribution consistant à distribuer lesdites données de transmission générées pendant le processus de ladite étape de génération de données de transmission audit dispositif terminal d'information ; dans lequel :
ladite étape de génération d'informations de gestion génère de nouvelles informations de gestion pour les sections dudit intervalle de temps donné pour lesquelles des informations de gestion n'ont pas été créées auparavant, et pour les sections dudit intervalle de temps donné pour lesquelles des informations de gestion ont déjà été créées, et utilise lesdites informations de gestion déjà créées.
